# EUROPEAN PATENT APPLICATION

(11) **EP 3 492 847 A1**
(43) Date of publication of application: **05.06.2019**
(21) Application number: 17204508.0
(22) Date of filing: 29.11.2017
(51) Int. Cl.: F25D 21/02, G01N 21/00

(54) **AN APPARATUS AND METHOD FOR DETECTING FREEZING OF A SUBSTANCE**

(71) Applicant: Vestel Elektronik Sanayi ve Ticaret A.S., 45030 Manisa (TR)
(72) Inventor: ÖCAL, Ömür, 45030 Manisa (TR); SARIARSLAN, Muhammet Kürsat, 45030 Manisa (TR)
(74) Representative: Flint, Adam

(57) **Abstract**

An apparatus (100) detects the freezing of a substance (102). The apparatus has a container (104) containing a substance (102). The substance (102) has a freezing temperature below which the substance (102) is solid and above which the substance (102) is not solid. The apparatus (100) has a light source (106) connected to the container (104). The apparatus (100) also has a light detector (108) arranged to detect light emitted by the light source (106) and passing through the container (104) from the light source (106) to the light detector (108). The intensity of light passing through the container (104) from the light source (106) to the light detector (108) as detected by the light detector (108) varies depending on whether the substance (102) in the container (104) is solid or not solid.

## Description

### Technical Field

The present disclosure relates to an apparatus and method for detecting freezing of a substance.

### Background

So-called frost-free refrigeration apparatus, such as freezers and refrigerators and the like, employ various complex methods for preventing a build-up of ice. One example of such a method is periodically heating the freezer or refrigerator to melt any ice that may have formed inside. This process can be wasteful and inefficient.

### Summary

According to a first aspect disclosed herein, there is provided an apparatus for detecting freezing of a substance, the apparatus comprising:
a container containing a substance , the substance having a freezing temperature below which the substance is solid and above which the substance is not solid;
a light source connected to the container; and
a light detector arranged to detect light emitted by the light source and passing through the container from the light source to the light detector;
wherein the intensity of light passing through the container from the light source to the light detector as detected by the light detector varies depending on whether the substance in the container is solid or not solid.

In an example, the light detector comprises a light-dependent resistor.

In another example the substance has a lower freezing point than the freezing point of water.

In another example a refrigeration apparatus comprises the apparatus for detecting freezing of a substance. The refrigeration apparatus may be for example a freezer, a refrigerator, or a combined refrigerator/freezer.

In another example, the refrigeration apparatus comprises a cooling element, the cooling element being arranged to cool an environment of the refrigeration apparatus, the apparatus being such that when the intensity of the light passing through the container from the light source to the light detector varies by a predetermined value, the cooling element is triggered to stop cooling the environment of the refrigeration apparatus.

According to a second aspect disclosed herein there is provided a method of operating a refrigeration apparatus, the method comprising:
detecting, by a light detector , light emitted by a light source, the light being emitted through a container from the light source to the light detector, the container comprising a substance;
determining if the light detected by the light detector indicates that the substance is in a solid state, wherein the intensity of light passing through the container from the light source to the light detector as detected by the light detector varies depending on whether the substance in the container is solid or not solid; and
pausing the functionality of a cooling system when the intensity of the light detected by the light detection component indicates that the substance is in a solid state.

In an example, the light detector comprises at least one light dependent resistor, wherein light emitted by a light source is detected by the at least one light-dependent resistor.

In another example, the substance has a lower freezing point than the freezing point of water.

### Brief Description of the Drawings

To assist understanding of the present disclosure and to show how embodiments may be put into effect, reference is made by way of example to the accompanying drawings in which:
Figure 1 shows schematically a side view of an example apparatus for detecting that a substance has solidified;
Figure 2 shows schematically an example refrigeration apparatus comprising the apparatus of Figure 1;
Figure 3A shows schematically a perspective view of the apparatus of Figure 1 when the substance is in a liquid state; and
Figure 3B shows schematically another perspective view of the apparatus of Figure 1 when the substance is in a solid state.

### Detailed Description

As mentioned previously, refrigeration apparatus, such as for example frost-free freezers and refrigerators and the like, prevent a build-up of ice, using relatively complex or inefficient methods. One such method is periodically restricting a cooling system to allow any ice that may have formed to melt. Such methods have no regard for whether ice has actually formed.

According to examples disclosed herein, an apparatus is arranged to detect freezing of a substance. The apparatus has a container containing a substance. The substance has a freezing temperature below which the substance is solid and above which the substance is not solid (and may be for example in a liquid or gaseous state, or possibly a liquid containing some solid (frozen) portions of the substance). The apparatus has a light source connected to the container. The apparatus also has a light detector, connected to the container, and arranged to detect light emitted by the light source. The light emitted by the light source passes through the container from the light source to the light detector. The intensity of the light detected by the light detector varies depending on whether the substance in the container is in a solid or a non-solid state.

The apparatus may be used in, for example, a refrigeration apparatus such as a freezer, refrigerator or a combined refrigerator/freezer unit for determining whether all or part of the refrigeration apparatus has developed ice. In this example, when the substance is frozen, the intensity of the light (which has travelled through the substance and the container) received by the light detector from the light source will be indicative of whether ice has formed in the refrigeration apparatus, at least in the region in the neighbourhood of the apparatus.

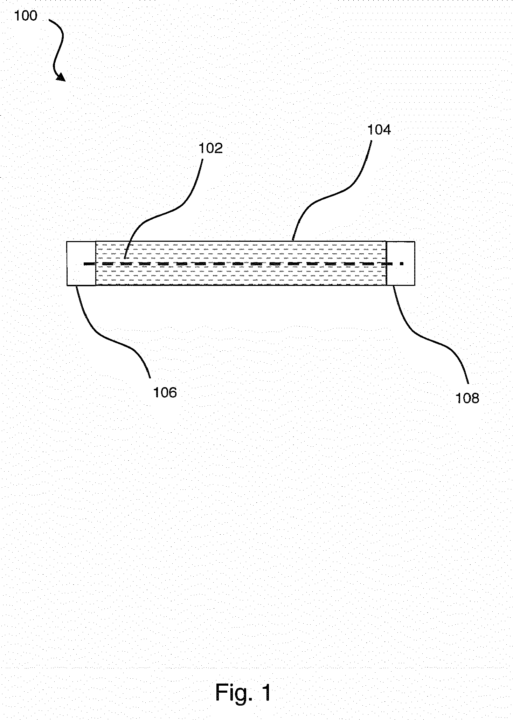

Figure 1 schematically shows a side view of an example apparatus 100 for detecting that a substance 102 has solidified. Below the freezing temperature the substance 102 is in a solid state, and above the freezing temperature the substance 102 is not in a solid state. When the substance 102 is above the freezing temperature, part of the substance 102 may be in a non-solid state and part may be in a solid state (the liquid substance 102 may contain portions of solid substance 102). This example may occur when the temperature of the substance 102 has changed to be above is still close to its freezing temperature. The non-solid state of the substance 102 may be liquid or gaseous. If the substance 102 is a liquid above its freezing temperature, the substance 102 may freeze/melt when transitioning between the solid and liquid states. If the substance is a gas above its freezing temperature, the substance may undergo deposition/sublimation when transitioning between the solid and gaseous states.

The substance 102 is held in a box-like container 104. The container 104 ensures that the substance 102 does not leak and remains in the path of light emitted by a light source 106.

The apparatus 100 comprises a light source 106 and a light detector 108. In this example, the light source 106 and the light detector 108 are shown directly connected to the container 104. Alternatively, the light source 106 and/or the light detector 108 may be arranged such that the light source 106 is able to emit a light to the light detector 108 through the container 104, with one or both of the light source 106 and the light detector 108 not being connected directly to the container. In one example wherein the apparatus 100 is used in a refrigeration apparatus, the container 104, the light source 106 and the light detector 108 may be mounted onto a wall of the refrigeration apparatus.

The light source 106 is arranged to emit light to the light detector 108 through the container 104. The container 104 comprises transparent walls at least at its opposite ends to allow light emitted by the light source 106 to pass through the container 104 towards the light detector 108. The light source 106 may be for example an LED (light emitting diode). The light detector 108 is located so as to receive light emitted by the light source 106. The intensity of the light signal detected by the light detector 108 is indicative of the state of the substance 102.

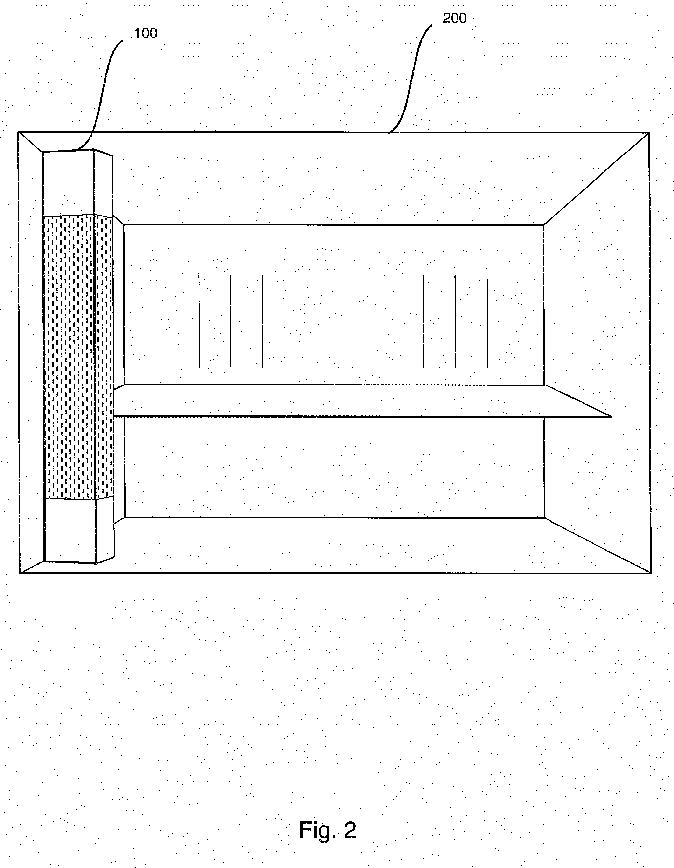

Figure 2 shows an example refrigeration apparatus 200 in which the apparatus 100 can be used for detecting the formation of ice in the refrigeration apparatus 200. In an example, the substance 102 is selected so that the freezing temperature (or melting point) of the substance 102 is lower than the freezing point of water, so as to not determine prematurely that ice has formed. In one example, the substance 102 comprises water and an anti-freeze (such as for example ethylene glycol or propylene glycol), wherein the anti-freeze reduces the freezing point (melting point) of water. In this example, the substance 102 will remain liquid when at 0°C, and the substance 102 will solidify at some temperature below 0°C.

In the example of Figure 2, the apparatus 100 may be used to determine that unwanted freezing of all or part of the refrigeration apparatus 200 has occurred. The apparatus 100 may be arranged to detect freezing and/or control of specific components of the refrigeration apparatus 200, such as a heat exchanger, coolant pipes and thermostats. This is discussed in further detail below.

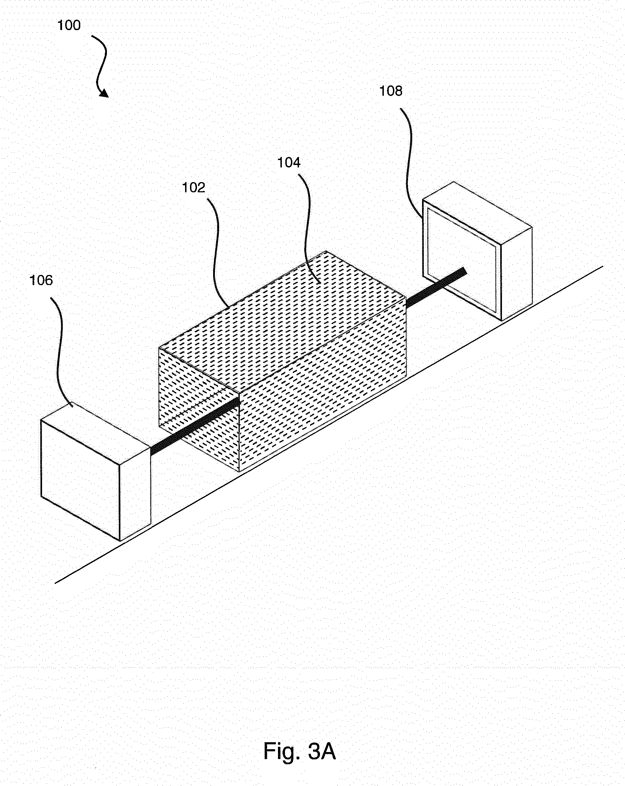

Figure 3A shows a perspective view of the apparatus 100 of Figure 1 in use when the substance 102 is in a non-solid state. The light source 106 emits light into the container 104. The light passes through the substance 102 which is in a non-solid state and is received by the light detector 108. In this example, the intensity of the light received by the light detector 108 is high, indicating that a large proportion of the light emitted by the light source 106 has passed through the container 104 and the substance 102 and that therefore the substance 102 is in a non-solid state.

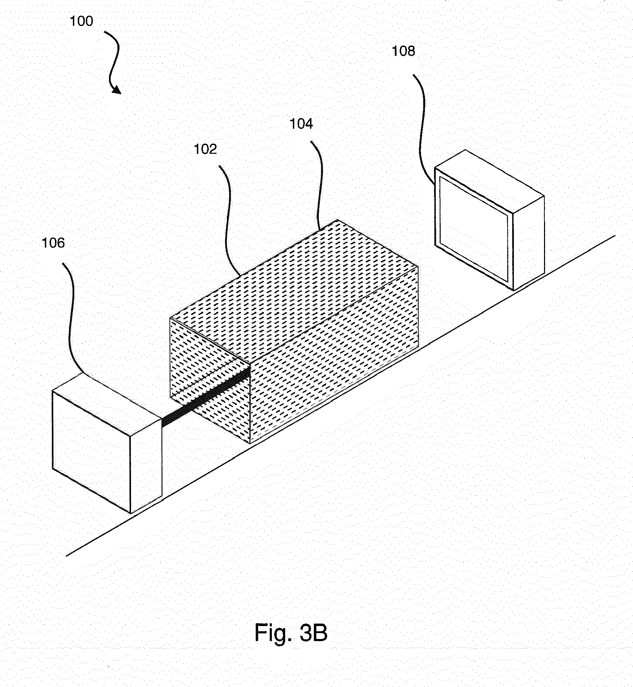

Figure 3B shows a perspective view of the apparatus 100 of Figure 1 in use when the substance 102 is in a solid state. The light source 106 emits light into the container 104. In this example, the intensity of the light received by the light detector 108 is low, indicating that the substance 102 is in a solid state as the substance in its solid state has a lower transmissivity to the light. Subsequently, a cooling element of a refrigeration apparatus 200 may be triggered to pause, thereby allowing the temperature of the apparatus to increase sufficiently to cause the substance 102 to return to a non-solid state (such as a liquid state). The cooling element may automatically be triggered to operate again once the intensity of light reaching the light detector 108 indicates that the substance 102 is in a non-solid state.

As mentioned above, the apparatus 100 may be used in a refrigeration apparatus 200 such as a refrigerator or a freezer or a combined refrigerator/freezer. In one example, the apparatus 100 may be positioned near a storage area of the refrigeration apparatus 200 in order to determine that freezing is occurring near contents of the refrigeration apparatus 200, such as food and ice packs. In another example, the apparatus 100 may be positioned near one or more components of the refrigeration apparatus 200, such as a heating element, pipes, cooling systems and the like. Such components of a refrigeration apparatus 200 can become damaged or lose efficiency when ice builds up on them, reducing the efficiency of the refrigeration apparatus 200 or even causing it to break down.

In one example, the substance 102 becoming solid is indicated by a low intensity of light being received at the light detector 108 from the light source 106. Upon determining that freezing is occurring by the apparatus 100, a process may be triggered to increase the temperature of a refrigeration apparatus 200 containing the apparatus 100. The process may, in one example, allow or cause the temperature of the substance 102 to increase, thereby causing the substance 102 to go from a solid state to a non-solid state. In this example, a high intensity of light may be received by the light detector 108 from the light source 106 once the substance 102 returns to a predominantly non-solid state.

In the example of a refrigeration apparatus 200, a determination by the apparatus 100 that freezing is occurring may be used to control a cooling system in order to allow the temperature of the refrigeration apparatus 200 to rise. The light detector 108 may be part of an electrical arrangement for triggering the cooling system to pause cooling of the refrigeration apparatus 200 when freezing is determined as occurring by the apparatus 100, and to resume cooling of the refrigeration apparatus 200 when freezing is not determined by the apparatus 100. The electrical arrangement may be part of an electric circuit used within a refrigeration apparatus 200.

In another example, a determination of the state of the substance 102 made by the apparatus 100 may be used to control a heating element in order to control the temperature of a refrigeration apparatus 200 or a portion or component of the refrigeration apparatus 200. When freezing is determined to be occurring by the apparatus 100 a heat exchanger may be triggered to raise the temperature of the refrigeration apparatus 200 or the relevant component(s) to defrost the refrigeration apparatus 200 or the component(s) as the case may be, by, for example, activating a process for warming up pipes carrying refrigerant, or for causing the temperature of a section or component, etc. of the freezer 100 to increase.

In the example above, the substance 102 is such that the intensity of the light received by the light detector 108 is high when the substance 102 is in a non-solid state and, conversely, the intensity of the light received by the light detector 108 is low when the substance 102 is in a solid state. An example of such a substance is water, optionally with an anti-freeze added.

In other examples, the substance 102 is such that the intensity of the light received by the light detector 108 is low when the substance 102 is in a non-solid state and, conversely, the intensity of the light received by the light detector 108 is high when the substance 102 is in a solid state.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus (100) for detecting freezing of a substance (102), the apparatus (100) comprising:
a container (104) containing a substance (102), the substance (102) having a freezing temperature below which the substance (102) is solid and above which the substance (102) is not solid;
a light source (106) connected to the container (104); and
a light detector (108) arranged to detect light emitted by the light source (106) and passing through the container (104) from the light source (106) to the light detector (108);
wherein the intensity of light passing through the container (104) from the light source (106) to the light detector (108) as detected by the light detector (108) varies depending on whether the substance (102) in the container (104) is solid or not solid.

2. An apparatus (100) according to claim 1, wherein the light detector (108) comprises a light-dependent resistor.

3. An apparatus (100) according to claim 1 or claim 2, wherein the substance (102) has a lower freezing point than the freezing point of water.

4. A refrigeration apparatus (200) comprising an apparatus (100) according to any of claims 1 to 3.

5. A refrigeration apparatus (200) according to claim 4, comprising a cooling element, the cooling element being arranged to cool an environment of the refrigeration apparatus (200), the apparatus (100) being such that when the intensity of the light passing through the container (104) from the light source (106) to the light detector (108) varies by a predetermined value, the cooling element is triggered to stop cooling the environment of the refrigeration apparatus (200).

6. A method of operating a refrigeration apparatus (200), the method comprising:
detecting, by a light detector (108), light emitted by a light source (106), the light being emitted through a container (104) from the light source (106) to the light detector (108), the container (104) comprising a substance (102);
determining if the light detected by the light detector (108) indicates that the substance (102) is in a solid state, wherein the intensity of light passing through the container (104) from the light source (106) to the light detector (108) as detected by the light detector (108) varies depending on whether the substance (102) in the container (104) is solid or not solid; and
pausing the functionality of a cooling system when the intensity of the light detected by the light detection component indicates that the substance (102) is in a solid state.

7. A method according to claim 6, wherein the light detector (108) comprises at least one light dependent resistor, wherein light emitted by a light source (106) is detected by the at least one light-dependent resistor.

8. A method according to claim 6 or claim 7, wherein the substance (102) has a lower freezing point than the freezing point of water.
